# EUROPEAN PATENT SPECIFICATION

(11) **EP 2 966 543 B1**
(45) Date of publication and mention of the grant of the patent: **10.10.2018**
(21) Application number: 14176199.9
(22) Date of filing: 08.07.2014
(51) Int. Cl.: G09G 3/20, G06F 3/01, G06F 3/048, H04M 1/02, G06F 1/16

(54) **Display management**
Anzeigeverwaltung
Gestion d'affichage

(43) Date of publication of application: 13.01.2016
(73) Proprietor: Nokia Technologies Oy, 02610 Espoo (FI)
(72) Inventor: Vilermo, Miikka Tapani, 33720 Tampere (FI); Lehtiniemi, Arto Juhani, 33720 Tampere (FI); Tammi, Mikko Tapio, 33720 Tampere (FI); Yliaho, Marko, 33720 Tampere (FI)
(74) Representative: Harrison, Scott David

(56) References cited:
- EP-A2- 2 584 438
- US-A1- 2013 076 649
- US-A1- 2013 145 311
- US-A1- 2014 015 743

## Description

### TECHNOLOGICAL FIELD

This present invention relates to an apparatus comprising a display with at least a front face and a side face and a method for display management. In particular, the present invention relates to changing an active display area encompassing a side face of the display by defining a position of a boundary of the active display area on the side face of the display based on deformation input provided by a user.

### BACKGROUND

A portable electronic device may have a deformable body. A user may provide input to the portable device by deforming its body, which causes the portable electronic device to perform a function.

The following references represent prior art relevant to the present invention. US 2014/0015743 discloses a flexible display apparatus. The flexible display apparatus includes a display, a sensor which senses shape deformation of the display, storage and a controller. If shape deformation is sensed, the storage stores operation state information of a first operation state of the flexible display apparatus prior to first shape deformation being performed. The controller performs a function corresponding to the first shape deformation if a second shape deformation different from the first shape deformation is sensed.

EP 2584438 discloses a flexible display device adapted to accurately detect bending information when the flexible display device is flexed, bent or folded, and to be capable of variously controlling an image displayed on a screen on the basis of the detected bending information.

US 2013/0145311 discloses a method for controlling a display in a portable terminal which includes sensing that a flexible display has been bent, dividing the flexible display into a main screen and a sub screen, outputting first information through the main screen and outputting second information through the sub screen.

US 2013/0076643 discloses an electronic device comprising a flexible display.

### BRIEF SUMMARY

According to various, but not necessarily all, embodiments of the invention there is provided an apparatus as claimed in claim 1.

According to various, but not necessarily all, embodiments of the invention there is provided a method as claimed in claim 8.

According to various, but not necessarily all, embodiments of the invention there is provided computer program code as claimed in claim 15.

The above-mentioned computer program code may be stored on a non-transitory computer readable medium.

The dependent claims define the preferred embodiments. These and other embodiments are further detailed below. The scope of the invention is defined by the claims.

### BRIEF DESCRIPTION

For a better understanding of various examples that are useful for understanding the brief description, reference will now be made by way of example only to the accompanying drawings in which:
fig. 1 illustrates a schematic of a first apparatus in the form of a chipset;
fig. 2 illustrates a schematic of a second apparatus in the form of a portable electronic device;
fig. 3A illustrates a perspective view of an example of the second apparatus;
fig. 3B illustrates a transverse plane passing through the example of the second apparatus;
fig. 3C illustrates a coronal plane passing through the example of the second apparatus;
fig. 3D illustrates a sagittal plane passing through the example of the second apparatus;
fig. 4 illustrates a flow chart of a method;
fig. 5A illustrates an active display area displayed on a display of the example of the second apparatus, when deformation input is applied about a vertical axis as illustrated by the arrows;
fig. 5B illustrates an active display area displayed on the display of the example of the second apparatus, when deformation input is applied about a vertical axis as illustrated by the arrows;
fig. 5C illustrates how graphical items may be displayed on a side face of the display of the example of the second apparatus, when the active display area has the form illustrated in fig. 5B;
fig. 6A illustrates an expanded plan view of a further example of the second apparatus, showing the active display area that is displayed when the same deformation input is applied as that shown in fig. 5A;
fig. 6B illustrates an expanded plan view of the further example of the second apparatus, showing the active display area that is displayed when the same deformation input is applied as that shown in fig. 5B;
fig. 7A illustrates an expanded plan view of the further example of the second apparatus, showing the active display area that is displayed when deformation input is applied to the display along a sagittal axis;
fig. 7B illustrates an expanded plan view of the further example of the second apparatus, showing the active display area that is displayed when deformation input is applied to the display along a sagittal axis which is of a higher magnitude and/or applied across a wider area than in that in fig. 7A;
figs. 8A and 8B illustrate an expanded plan view of the further example of the second apparatus, showing the active display area that is displayed when deformation input is provided about one or more sagittal axes, in the rotational directions illustrated by the arrows;
fig. 9A and 9B illustrates an expanded plan view of the further example of the second apparatus, showing the active display area that is displayed when deformation input is provided in different directions about one or more sagittal axes, in the directions illustrated by the arrows;
figs. 10A and 10B illustrates an expanded plan view of the further example of the second apparatus, showing the active display area that is displayed when deformation input is provided about one or more vertical axes, in the rotational directions illustrated by the arrows;
fig. 11A illustrates an expanded plan view of an additional example of the second apparatus, showing the active display area that is displayed within a front face of the display when deformation input is applied to the display along a sagittal axis; and
fig. 11B an expanded plan view of the additional example of the second apparatus, showing the active display area that is displayed within a front face of the display when deformation input is applied to the display along a sagittal axis that is of a higher magnitude and/or applied across a wider area than in that in fig. 11A.

### DETAILED DESCRIPTION

Embodiments of the invention relate to defining an active display area within a display of a device, based on deformation input detected by the device, and causing the active display area to be displayed on the display.

A technical effect of at least some embodiments of the invention is that the user is provided with feedback regarding the deformation input that has been sensed by the device. A further technical effect of some embodiments of the invention is that power may be saved by rendering parts of the display at least partially inactive when the deformation input is provided.

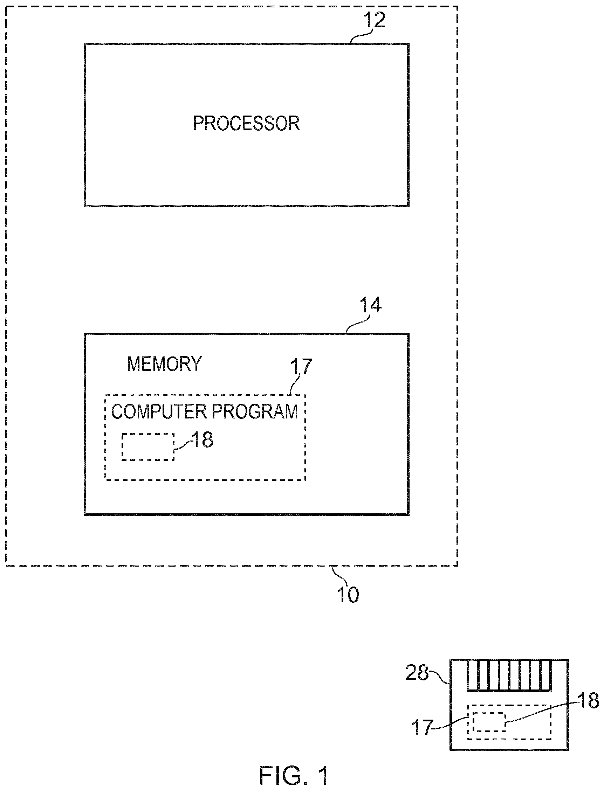

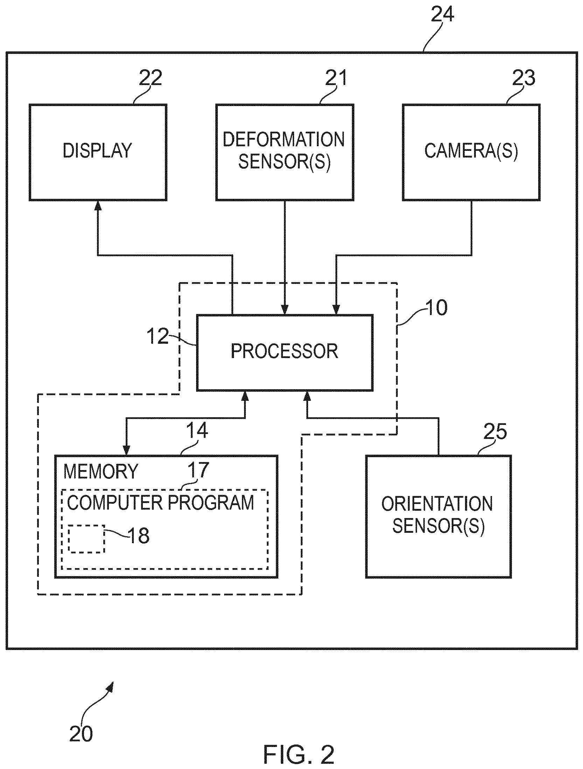

Figure 1 illustrates an apparatus 10 that may be a chip or a chipset. The apparatus 10 may form part of an electronic device such as that illustrated in figure 2.

The apparatus 10 comprises at least one processor 12 and at least one memory 14. A single processor 12 and a single memory 14 are shown in figure 1 for illustrative purposes.

The processor 12 is configured to read from and write to the memory 14. The processor 12 may comprise an output interface via which data and/or commands are output by the processor 12 and an input interface via which data and/or commands are input to the processor 12.

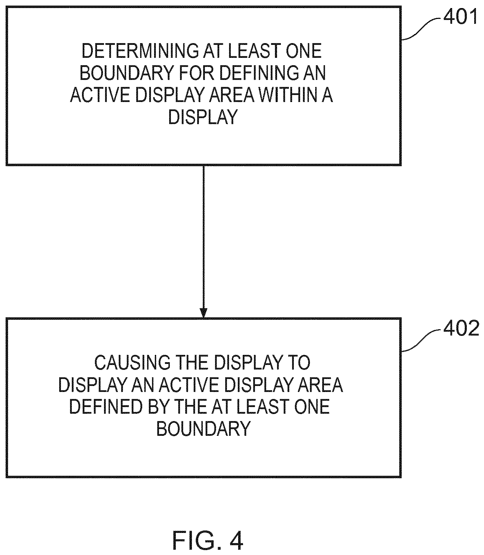

The memory 14 is illustrated as storing a computer program 17 which comprises computer program instructions/code 18 that control the operation of the apparatus 10 when loaded into the processor 12. The processor 12, by reading the memory, is able to load and execute the computer program code 18. The computer program code 18 provides the logic and routines that enables the apparatus 10 to perform the method illustrated in figure 4 and described below. In this regard, the processor 12 and the computer program code 18 provide means for performing the method illustrated in figure 4 and described below.

Although the memory 14 is illustrated as a single component in figure 1, it may be implemented as one or more separate components, some or all of which may be integrated/removable and/or may provide permanent/semi-permanent/dynamic/cached storage.

The computer program code 18 may arrive at the apparatus 10 via any suitable delivery mechanism 28. The delivery mechanism 28 may be, for example, a non-transitory computer-readable storage medium such as an optical disc or a memory card. The delivery mechanism 28 may be a signal configured to reliably transfer the computer program code 18. The apparatus 10 may cause the propagation or transmission of the computer program code 18 as a computer data signal.

Figure 2 illustrates an apparatus 20 in the form of an electronic device. The electronic device 20 may, for example, be a hand portable electronic device such as a mobile telephone, a tablet computer, a games console or a personal music player.

The example of the electronic device 20 illustrated in figure 2 includes one or more deformation sensors 21, a display 22, one or more cameras 23, one or more orientation sensors 25 and the apparatus 10 illustrated in figure 1 co-located in a housing 24. In other examples, the electronic device 20 might, for example, comprise other elements such as one or more radio frequency transceivers.

The elements 12, 14, 21, 22, 23 and 25 are operationally coupled and any number or combination of intervening elements can exist between them (including no intervening elements).

The processor 12 is configured to receive and process inputs from the deformation sensor(s) 21, the camera(s) 23 and the orientation sensor(s) 25.

The display 22 is configured to display information under the control of the processor 12. The display 22 comprises an array of pixels, which may be arranged in columns and rows.

The display 22 may be any type of display. It may, for example, be a liquid crystal display (LCD), an organic light emitting diode (OLED) display or a quantum dot display. The display 22 may or may not be a touch sensitive display.

The one or more deformation sensors 21 are configured to sense deformation inputs provided by a user. A deformation input is a user input that causes the shape of the (body of the) apparatus 20 to deform at least temporarily, and at least in part. The deformation of the apparatus 20 may or may not be visible to the naked eye.

The one or more deformation sensors 21 may, for example, include one or more pressure sensors and/or one or more strain gauges. In some embodiments, at least one deformation sensor may be integrated into the display 22. For instance, the display 22 may be pressure sensitive.

The one or more cameras 23 may be one or more front facing cameras that are configured to detect a direction of a user's gaze.

The one or more orientation sensors 25 are configured to detect an orientation of the apparatus 20, and may include one or more accelerometers and/or one or more gyroscopes.

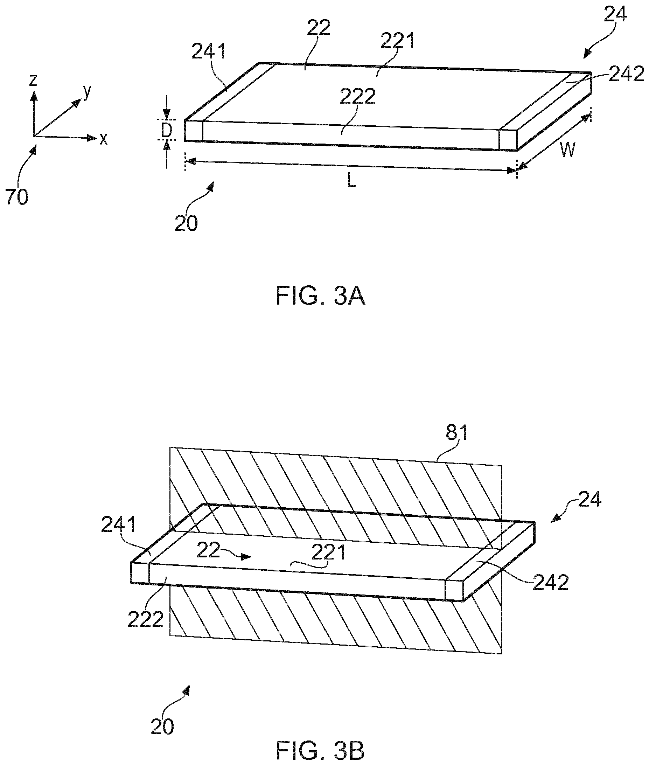

Fig. 3A illustrates a perspective view of an example of the second apparatus 20.

The apparatus 20 illustrated in fig. 3A has a length L, a width W and a depth D. The length L is the same or greater than the width W. The width W is the same or greater than the depth D. The length L may be substantially perpendicular to the width W and/or the depth D. The width W may be substantially perpendicular to the depth D.

The display 22 of the second apparatus 20 may comprise one or more faces. At least one face of the display 22 might not be parallel with at least one other face of the display 22. In the illustrated example, the display 22 has three faces, but only two faces 221, 222 can be seen. A first, main, face of the display 22 is labeled with the reference numeral 221 and has an outer surface which extends across the length L and the width W of the apparatus 20. A second, side, face of the display 22 is labeled with the reference numeral 222 and has an outer surface which extends across the length L and depth D of the apparatus 20. A third, side, face of the display 22 has an outer surface which is substantially parallel with the second face 222, substantially perpendicular to the first face 221, and extends across the length L and depth D of the apparatus 20. The second face 222 is separated from the third face by the width W of the apparatus 20.

Each of the second and third faces is not parallel with the first face 221 and each of the second and third faces may be substantially perpendicular to the first face 221. In this particular example, the whole of each of the second and third faces is substantially perpendicular to the first face 221.

In the illustrated example, the first, second and third faces of the display 22 are contiguous in that no aspect of the housing 24 separates one face from another. In other examples, one or more portions of the housing 24 may separate the first face 221 from the second face 222 and/or the third face.

When the display 22 is operational (that is, powered), it has an "active display area". In some instances, the active display area may encompass each and every pixel of the display 22. In other instances, the active display area does not encompass each and every pixel of the display 22 and, in those instances, the display 22 comprises an "inactive display area". The inactive display area is present, on the display 22, outside the active display area.

In some implementations, the processor 12 is configured to switch off some or all of the pixels in the inactive display area. In other implementations, none of the pixels in the inactive display area are switched off. Irrespective of whether the pixels in the inactive display area are switched on or switched off, in circumstances where the active display area does not encompass each and every pixel of the display 22, at least one visible boundary within the outer bounds of the display 22 defines the active display area and the inactive display area. The active display area is located within the at least one boundary, and the inactive display area is located outside the at least one boundary.

The inactive display area may be darker and/or dimmer than the active display area, and might be substantially black in color. The inactive display area might be substantially the same color as the housing 24. The active display area may or may not extend over one, some or all of the faces 221, 222 of the display 22.

Two portions 241, 242 of the outer surface of the housing 24 are visible in fig. 3A, and form the bezel around the display 22.

The outer surface of the housing 24 and the outer surface of the display 22 form at least part of the body of the apparatus 20. At least part of the apparatus 20 is deformable. In some examples, the housing 24 and the display 22 are deformable. In other examples, either the housing 24 or the display 22 is deformable. The deformation of the housing 24 and/or the display 22 may or may not be visible to the naked eye. The housing 24 and/or the display 22 may be deformable because it/they is/are bendable by a user.

For example, if a deformation/bending input is provided by a user, at least portion of the outer surface of the housing 24 and/or the display 22 is deformed/bent such that a curvature of the outer surface of the housing 24 and/or the display 22 changes while the deformation input is being applied. One or more portions of the housing 24 (outside of the display 22) may be displaced relative to other or more other portions of the housing 24 (outside of the display 22) when the deformation input is provided, due to the deformation of the housing 24 and/or the display 22.

The housing 24 and/or the display 22 may be resilient such that when the user ceases to apply the deformation input, the housing 24 and/or the display 22 returns to its original position.

The deformation sensor(s) 21 may be configured to sense a position and a magnitude of the deformation input applied by the user.

A set of Cartesian coordinate axes 70 is illustrated in fig. 3A. In the description going forward, the x-axis is considered to be parallel with a "coronal dimension", the y axis is considered to be parallel with a "vertical dimension" and the z axis is considered to be parallel with a "sagittal dimension".

Fig. 3B illustrates a transverse plane 81 passing through the apparatus 20. A transverse plane 81, in this context, passes from posterior to anterior when the apparatus 20 is held in a landscape position and is parallel with the sagittal and coronal dimensions. A transverse plane 81 divides the apparatus 20 into inferior and superior parts when the apparatus 20 is held in a landscape position.

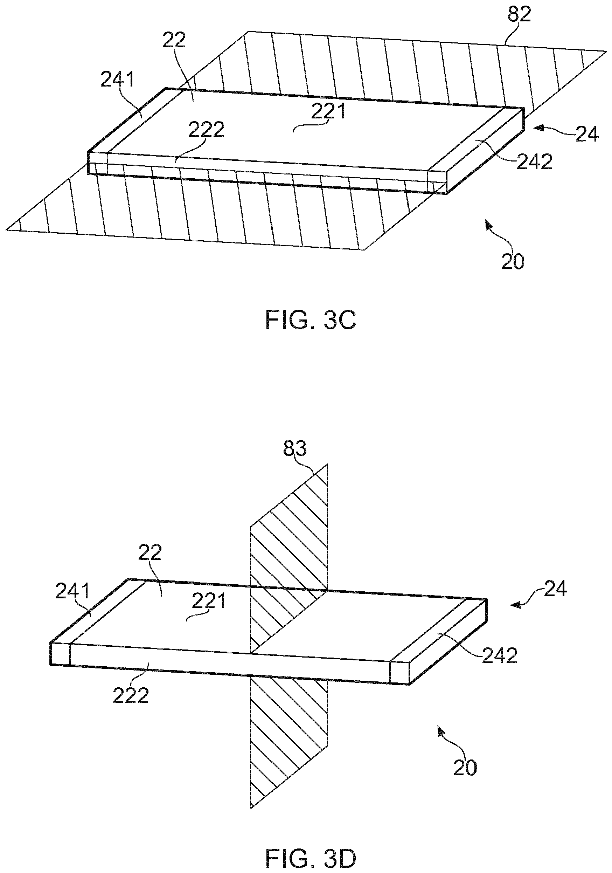

Fig. 3C illustrates a coronal plane 82 passing through the apparatus 20. A coronal plane 82 passes, in this context, from inferior to superior when the apparatus 20 is held in a landscape position and is parallel with the vertical and coronal dimensions. A coronal plane 82 divides the apparatus 20 into anterior and posterior parts when the apparatus 20 is held in a landscape position.

Fig. 3D illustrates a sagittal plane 83 passing through the apparatus 20. A sagittal plane 83 is parallel with the sagittal and vertical axes and divides the apparatus 20 into left and right parts when the apparatus 20 is held in a landscape position.

A method according to embodiments of the invention will now be described in conjunction with fig. 4.

Prior to any deformation input being provided, the active display area might encompass the whole of the area of the display 22, such that the boundaries of the active display area are at the periphery of the display 22. That is, no pixels of the display 22 are located outside the boundaries of the active display area.

In block 401 of fig. 4, a user deforms a body of the apparatus 20 and the one or more deformation sensors 21 provide one or more inputs to the processor 12 which indicate that the user is providing the deformation input. The processor 12 determines at least one boundary for defining an active display area with the display 22 based on the deformation input.

In block 402 of fig. 4, the processor 12 causes the display 22 to display an active display area that is defined by the boundary/boundaries that was/were defined in block 401.

The processor 12 may cause the position of the at least one boundary 41 to change gradually as the deformation input changes.

If the at least one boundary is at a first position at the periphery of the display 22 when the deformation input is applied by the user, the processor 12 responds to the deformation input by changing the position of the at least one boundary from the first position to a second position within the display 22 (meaning inside and spaced from the periphery of the display 22) in order to adjust the active display area.

In some examples, a user may change the deformation input that she is providing. The processor 12 may respond to a change in the deformation input by changing a position of at least one boundary from a first position (which could, for example, be at the periphery of the display 22 or within the display 22) to a second position within the display 22.

When the deformation input is changed, it may be that an axis about which the deformation input is provided changes, and/or a direction in which the deformation input is provided changes.

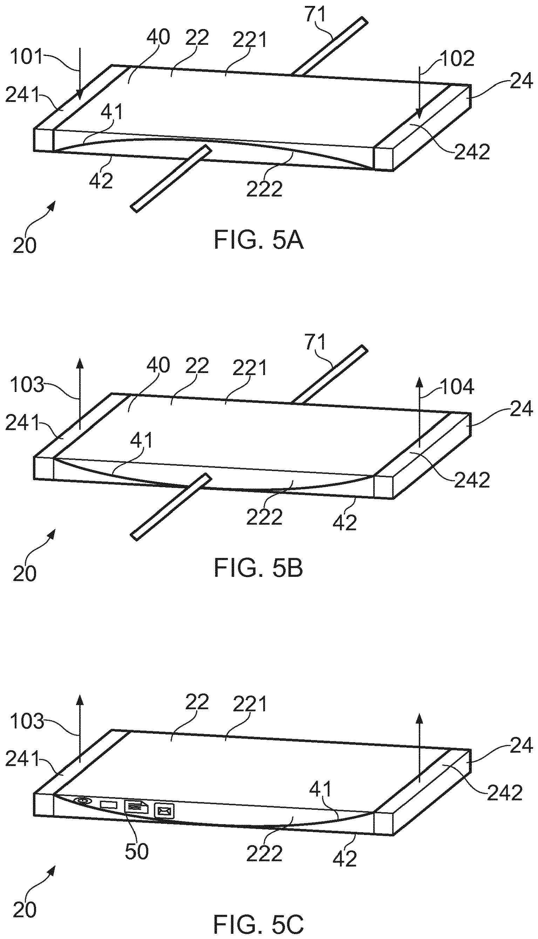

Various examples of the active display area are illustrated in figures 5A to 11B, and will now be described in turn.

In fig. 5A, a user provides a deformation input by applying first and second forces 101, 102 to the apparatus 20 as shown by the arrows labeled with the reference numerals 101 and 102. In applying the first force 101 to the apparatus 20, the user is applying a first rotational force in a first direction about a vertical axis 71. The second force 102 is in a second direction about the axis 71 which is rotationally opposite to the first direction. The user might, for example, apply a third force at the rear of the apparatus 20 in the opposite direction to the first and second forces 101, 102 (and which is aligned with the axis 71 in the sagittal dimension), while applying the first and second forces 101, 102, in order to cause the apparatus 20 to bend about the axis 71.

In response to receiving one or more inputs from the deformation sensor(s) 21, the processor 12 determines at least one boundary 41 for defining an active display area 40 within the display 22 and causes the display to display the active display area 40 defined by the at least one boundary 41. The boundary 41 is visible on the side face 222 of the display 22 in fig. 5A. An inactive display area 42 is positioned outside the boundary 41.

In the illustrated example, a boundary 41 defining the active display area 40 on a side face 222 of the display 22 is adjusted in response to the deformation input, but the boundaries defining the active display area 40 on the main face 221 of the display 22 are not adjusted.

The position of the at least one boundary 41, and therefore the size and shape of the active display area 40 and the inactive display area 42, may depend upon the magnitude of the deformation input provided by the user (that is, the magnitude of the first and second forces 101, 102). For example, the processor 12 may cause the at least one boundary 41 to change shape on the display 22 as the magnitude of the deformation input increases/decreases.

Alternatively or additionally, the position of the at least one boundary 41, and therefore the size and/or shape of the active display area 40 and the inactive display area 42, may depend upon the position at which the deformation input is provided by the user. For example, the processor 12 may cause the greatest change in the size and/or the shape of the active display area 40 to occur at or close to the location(s) at which the deformation input is provided.

As mentioned above, a technical effect of at least some embodiments of the invention is that the user is provided with feedback regarding the deformation input that has been sensed by the device. The sensed magnitude of the deformation input and/or the sensed location(s) of the deformation input may be conveyed to the user by the size and/or shape of the active display area 40.

In fig. 5B, a user provides a deformation input by applying first and second forces 103, 104 to the apparatus 20 as shown by the arrows labeled with the reference numerals 103 and 104. The first force 103 that is applied in the fig. 5B example is applied in the opposite direction to the first force 101 in the fig. 5A example. The second force 104 that is applied in the fig. 5B example is applied in the opposite direction to the second force 102 in the fig. 5A example.

It can be seen from fig. 5B that the processor 12 defines a different boundary 41 on the side face 222 of the display 22 compared with that which was defined in the fig. 5A example.

In some implementations, the processor 12 may cause one or more user selectable graphical items to be displayed in the active display area 40 of the display 22. The processor 12 may be configured to refrain from displaying user selectable graphical items in the inactive display area 42 on the display 22. User selection of a graphical item displayed in the active display area 40 may cause the processor 12 to launch an application associated with the graphical item.

The processor 12 may be configured to re-position the one or more graphical items and/or change the size and/or shape of the one or more graphical items as the boundary 41 and the active display area 40 change shape, such that the one or more graphical items continue to be displayed within the active display area 40. For instance, prior to the deformation input, the one or more graphical items 50 may have been positioned on a portion of the display 22 that changes from being part of the active display area 40 to being part of the inactive display area 42 as the deformation input is applied.

Fig. 5C illustrates a plurality of graphical items 50 displayed on the side face 222 of the display 22, in the active display area 40. In illustrated example, the processor 12 has adjusted the size of some of the graphical items 50 when the active display area 40 was adjusted, based on deformation input provided by the user.

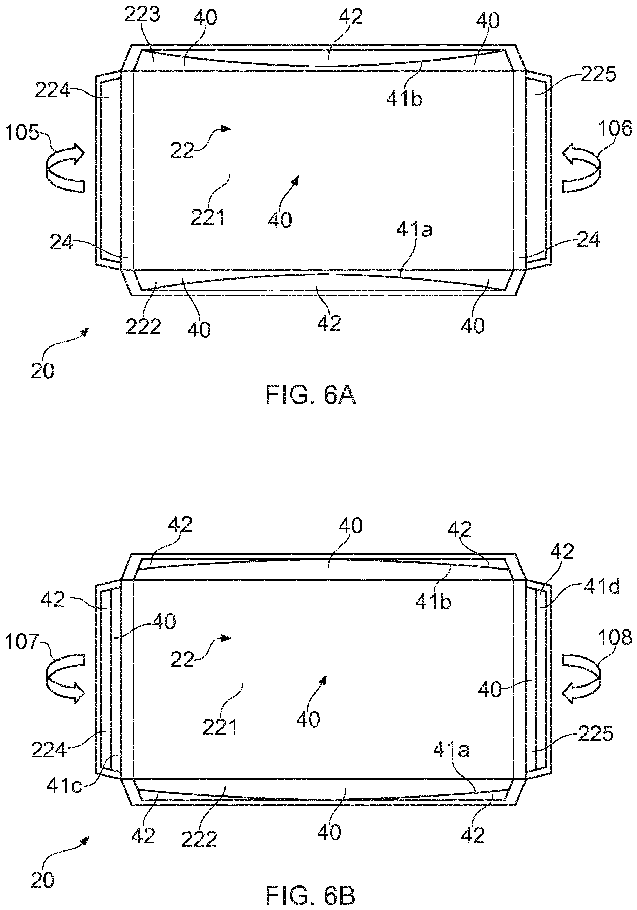

Figures 6A to 10B illustrate an expanded plan view of another example of the apparatus 20 and its display 22. In this example, the display 22 includes first, second, third, fourth and fifth faces 221-225. In some alternative implementations, the display 22 might not include one or more of the second, third, fourth and fifth faces 222-225.

The display 22 comprises a main face 221 and four side faces 222-224. The first and second side faces have a similar form to those illustrated in figures 5A to 5C.

The fourth face 224 has an outer surface which is substantially perpendicular to the first, second and third faces 221, 222, 223 and substantially parallel with the fifth face 225. The fourth face 224 extends across the length L and width W of the apparatus 20. The fifth face 225 has an outer surface which is substantially perpendicular to the first, second and third faces 221, 222, 223. The fifth face 225 extends across the length L and width W of the apparatus 20. The fifth face 225 is separated from the fourth face 224 by the length L of the apparatus 20.

In figure 6A, the first and fourth faces 221, 224 of the display 22 are not contiguous because a portion of the housing 24 separates the first face 221 from the fourth face 224. Similarly, the first and fifth faces 221, 225 of the display 22 are not contiguous because a portion of the housing 24 separates the first face 221 from the fifth face 225. In other examples, the first and fourth faces 221, 224 of the display 22 and/or the first and fifth faces 221, 225 of the display 22 may be contiguous.

In figure 6A, the arrows labeled with the reference numerals 105 and 106 indicate that a deformation input is provided by the user that is the same as that provided by the user in the figure 5A example. Figure 6A shows that the processor 12 has defined and caused display of a boundary 41a for the active display area 40 which is positioned on the second face 222 of the display 22, and defined and caused display of a further boundary 41b for the active display area 40 which is positioned on the third face 223 of the display 22.

In figure 6B, the arrows labeled with the reference numerals 107 and 108 indicate that a deformation input is provided by the user that is the same as that provided by the user in the figure 5B example. Figure 6B shows that the processor 12 has defined and caused display of boundaries 41a, 41b, 41c and 41d for the active display area 40 which are positioned on the second, third, fourth and fifth faces 222-225 of the display 22.

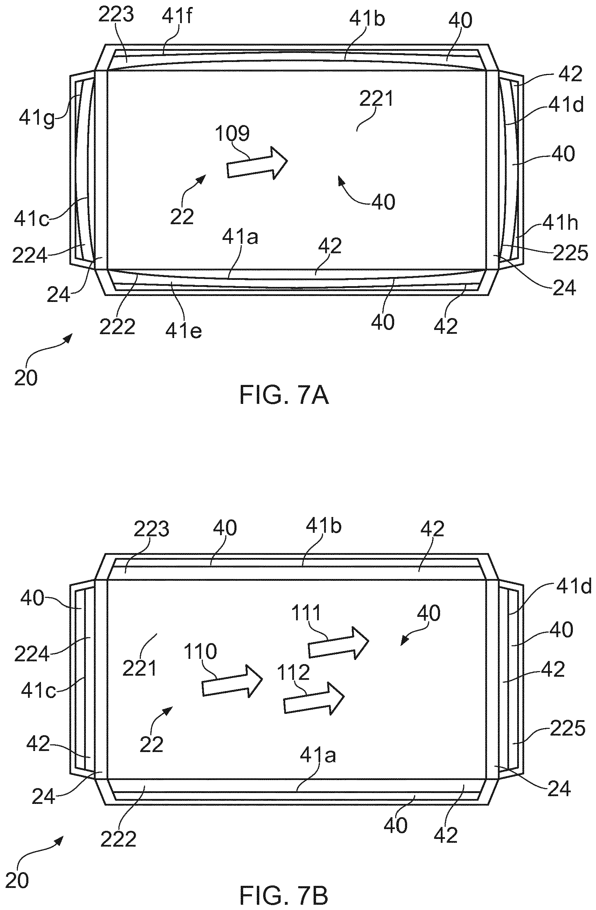

In figure 7A, the arrow labeled with the reference numeral 109 indicates that a deformation input is provided by the user at the main face 221 of the display 22, in the sagittal dimension. Figure 7A shows that the processor 12 has defined and caused display of boundaries 41a-41g for the active display area 40 which are positioned on the second, third, fourth and fifth faces 222-225 of the display 22. The example illustrated in figure 7A differs from previous examples in that some portions of the active display area 40 have been divided from other portions by boundaries 41a to 41d illustrated on the second, third, fourth and fifth faces 222-225 of the display 22.

In figure 7B, a deformation input is provided by the user at the main face 221 of the display 22, in the sagittal dimension. The arrows 110, 111 and 112 illustrate in figure 7B that a force is applied which is of a higher magnitude and/or applied across a wider area than that applied in the example illustrated in figure 7A.

For instance, a user may use a single digit to apply the force illustrated in figure 7A and multiple digits to apply the force in figure 7B. Figure 7B shows that the processor 12 has defined and caused display of boundaries 41a to 41d for the active display area 40 which are positioned on the second, third, fourth and fifth faces 222-225 of the display 22. It can be seen that, as the deformation input is of a higher magnitude and/or applied across a wider area in figure 7B than in figure 7A, the inactive display area 42 is greater in figure 7B than in figure 7A. In this embodiment, when the magnitude of a deformation input increases and/or the area across which the deformation input is applied increases, the size of the inactive display area 42 increases and the size of the active display area 40 decreases. Portions of the display 22 which were part of the active display area 40 become part of the inactive display area 42. The increase in size of the inactive display area 42 is therefore the same as the decrease in size of the active display area 40.

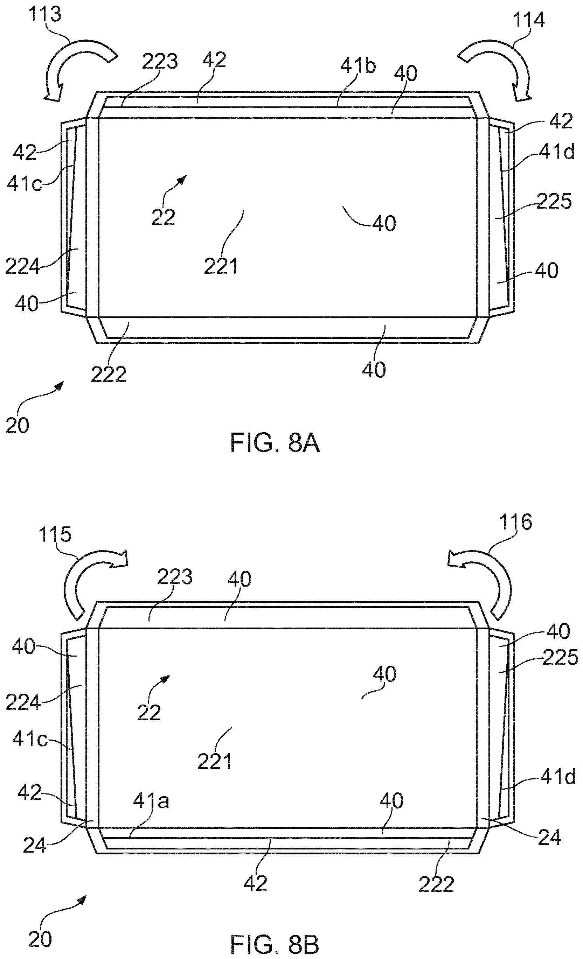

In figure 8A, the arrows labeled with the reference numerals 113 and 114 indicate that a deformation input is provided by the user by providing a rotational force about one or more sagittal axes. A first force 113 is applied in an anti-clockwise direction, while a second force 114 is applied in a clockwise direction. Figure 8A shows that the processor 12 has defined and caused display of boundaries 41b-41d for the active display area 40 which are positioned on the third, fourth and fifth faces 223-225 of the display 22.

In figure 8B, the arrows labeled with the reference numerals 115 and 116 indicate that a deformation input is provided by the user by applying rotational forces about one or more sagittal axes. A first force 115 is applied in a clockwise direction, in the opposite direction from the first force 113 which was applied in figure 8A. A second rotational force 116 is applied in an anti-clockwise direction, opposite to the direction in which the second force 114 is applied in the figure 8A example. Figure 8B shows that the processor 12 has defined and caused display of boundaries 41a, 41c and 41d for the active display area 40 which are positioned on the second, fourth and fifth faces 222, 224 and 225 of the display 22.

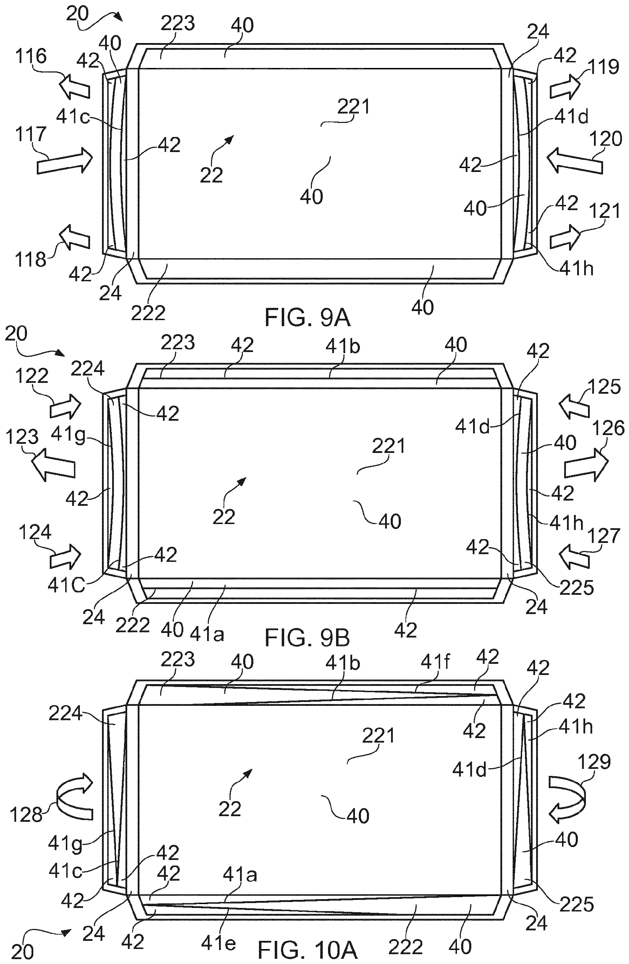

In figure 9A, the user grips the apparatus 20 by placing two fingers of each hand behind the apparatus 20 and by placing his thumbs on the front surface of the apparatus 20. The user pushes forwards with his thumbs, as indicated by the arrows 117 and 120 illustrated in figure 9A, and pushes the apparatus 20 towards himself, from behind, as illustrated by the arrows 116, 118, 119 and 121 in figure 9A.

Figure 9A shows that the processor 12 has defined and caused display of boundaries 41c, 41d, 41g and 41h for the active display area 40 on the fourth and fifth faces 224, 225 of the display 22. Portions of the inactive display area 42 are provided on the fourth and fifth faces 224, 225 of the display 22 but not on the first, second and third faces 221-223 of the display 22.

It can be seen in figure 9A that some portions of the active display area 40 are separated, at least in part, from other portions of the active display area 40 by portions of the inactive display area 42.

The example illustrated in figure 9B differs from the example illustrated in figure 9A in that each force which was applied in the figure 9A example is applied in the opposite direction in the figure 9B example. It can be seen that the processor has defined and caused display of boundaries 41a, 41b, 41c, 41d, 41g and 41h for the active display area 40 which are positioned on the second, third, fourth and fifth faces 222-225 of the display 22. Some portions of the inactive display area 42 separate some portions of the active display area 40 from other portions of the active display area 40.

In figure 10A the arrows labeled with the reference numerals 128 and 129 indicate that a deformation input is provided by a user by providing a first rotational force 128 and a second rotational force 129 about one or more vertical axes. The first and second forces 128, 129 are in substantially the same rotational direction. Figure 10A shows that the processor 12 has defined and caused display of boundaries 41a-41h for the active display area 40 on the second, third, fourth and fifth faces 222-225 of the display 22. It can also be seen that some portions of the active display area 40 are separated from other portions of the active display area 40 by portions of the inactive display area 42.

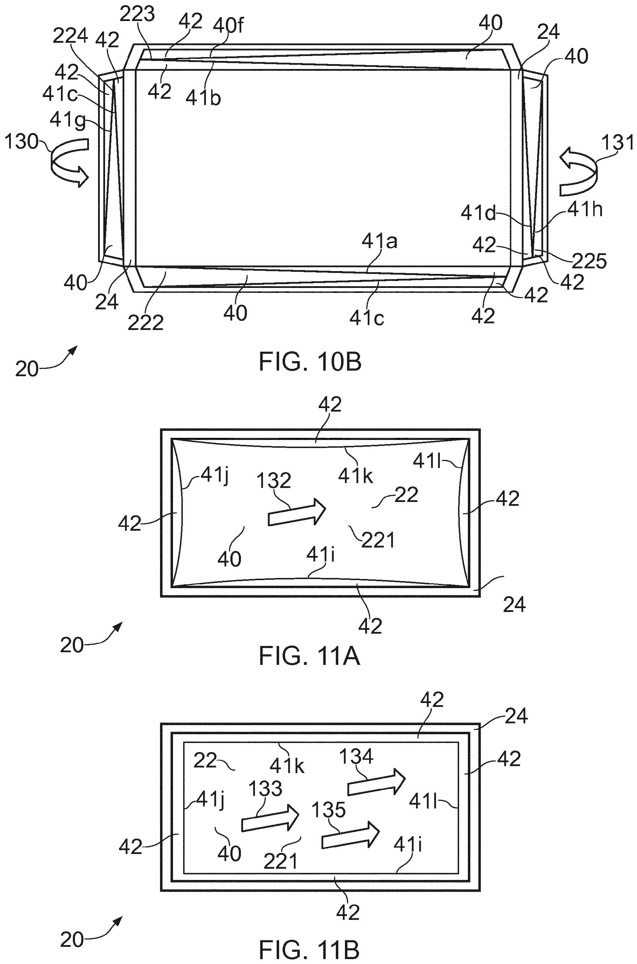

In figure 10B, rotational forces 130 and 131 are applied which are in an opposite direction to those that are applied in the figure 10A example. Figure 10B shows that the processor 12 has defined and caused display of boundaries 41a-41h for the active display area 40 on the second, third, fourth and fifth faces 222-225 of the display 22. It can also be seen that some portions of the active display area 40 are separated from other portions of the active display area 40 by portions of the inactive display area 42.

Figures 11A and 11B illustrate an additional example of the apparatus 20, not forming part of the present invention, which does not include the second, third, fourth and fifth faces 222-225 of the display 22. The display 22 consists of the main face 221. When a deformation input is provided by applying a force 132 to the main face 221 of the display 22 along a sagittal axis, the processor 12 defines and causes display of boundaries 41i-41l for the active display area 40 on the main face 221 of the display 22. Figure 11B illustrates an example where the force that is applied to the main face 221 of the display 22 is of a greater magnitude and/or applied across a wider area than that in the figure 11A example, as indicated by the arrows 133, 134 and 135 in figure 11B. For example, the deformation input may be provided using a single digit in the figure 11A example and multiple digits in the 11B example.

In one aspect, when the magnitude of a deformation input increases and/or the area across which the deformation input is applied increases, the size of the inactive display area 42 increases and the size of the active display area 40 decreases. Portions of the display 22 which were part of the active display area 40 become part of the inactive display area 42. The increase in size of the inactive display area 42 is therefore the same as the decrease in size of the active display area 40.

It will be appreciated by those skilled in the art that the size and shape of the active display area 40 and the inactive display area 42 may differ from those illustrated in the appended figures. In some embodiments, at least one boundary which is defined by the processor 12 may be defined based on a user gaze direction and/or an orientation of the apparatus 20. For example, the processor 12 may use inputs from the one or more cameras 23 to determine the user gaze direction. The size and/or shape of the active display area 40 and the inactive display area 42 may then depend on the user gaze direction. Alternatively or additionally, the user may receive inputs from the one or more orientation sensors 25 to determine an orientation of the apparatus 20. The size and/or shape of the active display area 40 and the inactive display area 42 may then depend upon the determined orientation.

References to 'computer-readable medium', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated may represent actions in a method and/or sections of code in the computer program 17. The illustration of a particular order to the blocks does not necessarily imply that there is a required or preferred order for the blocks and the order and arrangement of the block may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed. For example, the size and shape of the apparatus 20 illustrated in figures 3A to 11B may be different from those illustrated. For instance, the display 22 may have more or fewer faces 221-225 than those illustrated in figures 3A to 11B and those faces 221-225 may be at different angles relative to one another than that illustrated in figures 3A to 11B.

A number of different types of deformation input are described in the examples provided above. It will be appreciated by those skilled in the art that other types of deformation input may be provided in other examples which fall within the scope of the claims, such as squeezing deformation inputs and twisting deformation inputs. Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. An apparatus (20) having a length (L), a width (W) and a depth (D), the apparatus comprising:
a display (22) comprising at least a front face (221) and a side face (222-225),
the front face of the display extending across the length and the width of the
apparatus and the side face of the display extending across the length and the depth of the apparatus; and
at least one processor (12) and a memory (14) storing computer program code (18) configured, working with the at least one processor, to:
define an active display area (40), prior to any deformation input being provided to the apparatus by a user, that encompasses at least the front face and the side face of the display; and
**characterized in that** the computer program code is further configured, working with the at least one processor, to cause, in response to a deformation input being provided to the apparatus by the user, the display to change the active display area by defining a position of a boundary (41; 41a - 41h) of the active display area on the side face of the display based on the deformation input.

2. The apparatus of claim 1, wherein the deformation input is provided by the user deforming a body of the apparatus.

3. The apparatus of claim 2, wherein an outer surface of the display forms part of the body of the apparatus.

4. The apparatus of claim 1, 2 or 3, wherein the computer program code is configured, working with the at least one processor, to cause the boundary to be displayed at a periphery of the display prior to any deformation input being provided to the apparatus by the user.

5. The apparatus of any of the preceding claims, wherein at least a portion of the side face of the display is substantially perpendicular to the front face of the display.

6. The apparatus of any of the preceding claims, wherein the computer program code is configured, working with the at least one processor, to cause an inactive display area (42) to be present, on the side face of the display and outside the active display area in response to the deformation input.

7. The apparatus of claim 6, wherein the inactive display area is darker and/or dimmer than the active display area.

8. A method, comprising:
defining an active display area (40) of a display (22) comprising at least a front
face (221) and a side face (222-225), wherein the front face of the display extends across a length and a width of the apparatus and the side face of the display extends across the length and a depth of the apparatus, and the active
display area encompasses at least the front face and the side face of the display prior to any deformation input being provided to the apparatus by a user; and **characterized by** causing (402), in response to a deformation input being provided to the apparatus by the user (401), the display to change the active display area by defining a position of a boundary (41; 41a - 41h) of the active display area on the side face of the display based on the deformation input.

9. The method of claim 8, wherein the deformation input is provided by the user deforming a body of the apparatus.

10. The method of claim 9, wherein an outer surface of the display forms part of the body of the apparatus.

11. The method of any of claims 8 to 10, wherein the boundary is displayed at a periphery of the display prior to any deformation input being provided to the apparatus by the user.

12. The method of any of claims 8 to 11, wherein at least a portion of the side face of the display is substantially perpendicular to the front face of the display.

13. The method of any of claims 8 to 12, wherein an inactive display area (42) is presented, on the side face of the display and outside the active display area in response to the deformation input.

14. The method of claim 13, wherein the inactive display area is darker and/or dimmer than the active display area.

15. Computer program code (18) that, when performed by at least one processor (12), causes the method as claimed in at least one of claims 8 to 14 to be performed.

## Patentansprüche

1. Vorrichtung (20) mit einer Länge (L), einer Breite (W) und einer Tiefe (D), wobei die Vorrichtung umfasst:
eine Anzeige (22), umfassend mindestens eine Vorderfläche (221) und eine Seitenfläche (222-225), wobei sich die Vorderfläche der Anzeige quer über die Länge und die Breite der Vorrichtung erstreckt, und sich die Seitenfläche der Anzeige quer über die Länge und die Tiefe der Vorrichtung erstreckt; und
mindestens einen Prozessor (12) und einen Speicher (14), der einen Computerprogrammcode (18) speichert, und der ausgelegt ist, im Zusammenwirken mit dem mindestens einen Prozessor:
eine aktive Anzeigefläche (40) zu definieren, bevor irgendeine Verformungseingabe von einem Benutzer an die Vorrichtung geliefert wird, die mindestens die Vorderfläche und die Seitenfläche der Anzeige umfasst; und
**dadurch gekennzeichnet, dass** der Computerprogrammcode ferner ausgelegt ist, im Zusammenwirken mit dem mindestens einen Prozessor, ansprechend darauf, dass irgendeine Verformungseingabe von einem Benutzer an die Vorrichtung geliefert wird, die Anzeige zu veranlassen, die aktive Anzeigefläche durch Definieren einer Position einer Begrenzung (41; 41a-41h) der aktiven Anzeigefläche auf der Seitenfläche der Anzeige auf der Basis der Verformungseingabe zu ändern.

2. Vorrichtung nach Anspruch 1,
wobei die Verformungseingabe von dem Benutzer geliefert wird, die einen Körper der Vorrichtung verformt.

3. Vorrichtung nach Anspruch 2,
wobei eine Außenfläche der Anzeige einen Teil des Körpers der Vorrichtung bildet.

4. Vorrichtung nach Anspruch 1, 2 oder 3,
wobei der Computerprogrammcode ausgelegt ist, im Zusammenwirken mit dem mindestens einen Prozessor, zu veranlassen, dass die Begrenzung an einer Peripherie der Anzeige angezeigt wird, bevor irgendeine Verformungseingabe von dem Benutzer an die Vorrichtung geliefert wird.

5. Vorrichtung nach einem der vorhergehenden Ansprüche,
wobei mindestens ein Abschnitt der Seitenfläche im Wesentlichen rechtwinklig zur Vorderfläche der Anzeige ist.

6. Vorrichtung nach einem der vorhergehenden Ansprüche,
wobei der Computerprogrammcode ausgelegt ist, im Zusammenwirken mit dem mindestens einen Prozessor, zu veranlassen, dass eine inaktive Anzeigefläche (42) auf der Seitenfläche der Anzeige und außerhalb der aktiven Anzeigefläche ansprechend auf die Verformungseingabe vorhanden ist.

7. Vorrichtung nach Anspruch 6,
wobei die inaktive Anzeigefläche dunkler und/oder gedimmter ist als die aktive Anzeigefläche.

8. Verfahren, umfassend:
Definieren einer aktiven Anzeigefläche (40) einer Anzeige (22), umfassend mindestens eine Vorderfläche (221) und eine Seitenfläche (222-225), wobei sich die Vorderfläche der Anzeige quer über eine Länge und eine Breite der Vorrichtung erstreckt, und sich die Seitenfläche der Anzeige quer über die Länge und eine Tiefe der Vorrichtung erstreckt, und die aktive Anzeigefläche mindestens die Vorderfläche und die Seitenfläche der Anzeige umfasst, bevor irgendeine Verformungseingabe von einem Benutzer an die Vorrichtung geliefert wird; und
**dadurch gekennzeichnet, dass**, ansprechend darauf, dass irgendeine Verformungseingabe von dem Benutzer an die Vorrichtung geliefert wird (401), die Anzeige veranlasst wird (402), die aktive Anzeigefläche durch Definieren einer Position einer Begrenzung (41; 41a-41h) der aktiven Anzeigefläche auf der Seitenfläche der Anzeige auf der Basis der Verformungseingabe zu ändern.

9. Verfahren nach Anspruch 8,
wobei die Verformungseingabe von dem Benutzer geliefert wird, die einen Körper der Vorrichtung verformt.

10. Verfahren nach Anspruch 9,
wobei eine Außenfläche der Anzeige einen Teil des Körpers der Vorrichtung bildet.

11. Verfahren nach einem der Ansprüche 8 bis 10,
wobei die Begrenzung an einer Peripherie der Anzeige angezeigt wird, bevor irgendeine Verformungseingabe von dem Benutzer an die Vorrichtung geliefert wird.

12. Verfahren nach einem der Ansprüche 8 bis 11,
wobei mindestens ein Abschnitt der Seitenfläche im Wesentlichen rechtwinklig zur Vorderfläche der Anzeige ist.

13. Verfahren nach einem der Ansprüche 8 bis 12,
wobei eine inaktive Anzeigefläche (42) auf der Seitenfläche der Anzeige und außerhalb der aktiven Anzeigefläche ansprechend auf die Verformungseingabe präsentiert wird.

14. Verfahren nach Anspruch 13,
wobei die inaktive Anzeigefläche dunkler und/oder gedimmter ist als die aktive Anzeigefläche.

15. Computerprogrammcode (18), welcher, wenn er von mindestens einem Prozessor (12) ausgeführt wird, veranlasst, dass das Verfahren nach mindestens einem der Ansprüche 8 bis 14 vorgenommen wird.

## Revendications

1. Appareil (20) ayant une longueur (L) , une largeur (W) et une profondeur (D), l'appareil comprenant :
un dispositif d'affichage (22) comprenant au moins une face avant (221) et une face latérale (222 à 225), la face avant du dispositif d'affichage s'étendant sur la longueur et la largeur de l'appareil et la face latérale du dispositif d'affichage s'étendant sur la longueur et la profondeur de l'appareil ; et
au moins un processeur (12) et une mémoire (14) stockant un code de programme informatique (18) configuré, en collaboration avec le ou les processeurs, pour :
définir une zone d'affichage active (40), avant qu'une entrée de déformation soit fournie à l'appareil par un utilisateur, qui englobe au moins la face avant et la face latérale du dispositif d'affichage ;
et **caractérisé en ce que** le code de programme informatique est configuré en outre,
pour travailler avec le ou les processeurs pour amener, en réponse à une entrée de déformation fournie à l'appareil par l'utilisateur, le dispositif d'affichage à modifier la zone d'affichage active en définissant une position d'une limite (41 ; 41a à 41h) de la zone d'affichage active sur la face latérale du dispositif d'affichage en fonction de l'entrée de déformation.

2. Appareil selon la revendication 1, dans lequel l'entrée de déformation est fournie par l'utilisateur en déformant un corps de l'appareil.

3. Appareil selon la revendication 2, dans lequel une surface extérieure du dispositif d'affichage fait partie du corps de l'appareil.

4. Appareil selon la revendication 1, 2 ou 3, dans lequel le code de programme d'ordinateur est configuré, en collaboration avec le ou les processeurs, pour que la limite soit affichée en une périphérie du dispositif d'affichage avant que l'utilisateur ne fournisse une entrée de déformation quelconque à l'appareil.

5. Appareil selon l'une quelconque des revendications précédentes, dans lequel au moins une partie de la face latérale du dispositif d'affichage est sensiblement perpendiculaire à la face avant du dispositif d'affichage.

6. Appareil selon l'une quelconque des revendications précédentes, dans lequel le code de programme d'ordinateur est configuré, en collaboration avec le ou les processeurs, pour qu'une zone d'affichage inactive (42) soit présente sur la face latérale du dispositif d'affichage et à l'extérieur de la zone d'affichage active en réponse à l'entrée de déformation.

7. Appareil selon la revendication 6, dans lequel la zone d'affichage inactive est plus sombre et/ou moins éclairée que la zone d'affichage active.

8. Procédé comprenant :
la définition d'une zone d'affichage active (40) d'un dispositif d'affichage (22) comprenant au moins une face avant (221) et une face latérale (222 à 225), dans lequel la face avant du dispositif d'affichage s'étend sur une longueur et une largeur de l'appareil et la face latérale du dispositif d'affichage s'étend sur la longueur et la profondeur de l'appareil, et la zone d'affichage active englobe au moins la face avant et la face latérale du dispositif d'affichage avant qu'une entrée de déformation quelconque soit fournie à l'appareil par un utilisateur ; et **caractérisé par** le fait d'amener (402),
en réponse à une entrée de déformation fournie à l'appareil par l'utilisateur (401), le dispositif d'affichage à modifier la zone d'affichage active en définissant une position d'une limite (41 ; 41a à 41h) de la zone d'affichage active sur la face latérale du dispositif d'affichage en fonction de l'entrée de déformation.

9. Procédé selon la revendication 8, dans lequel l'entrée de déformation est fournie par l'utilisateur en déformant un corps de l'appareil.

10. Procédé selon la revendication 9, dans lequel une surface extérieure du dispositif d'affichage fait partie du corps de l'appareil.

11. Procédé selon l'une quelconque des revendications 8 à 10, dans lequel la limite est affichée à la périphérie du dispositif d'affichage avant qu'une entrée de déformation quelconque soit fournie à l'appareil par l'utilisateur.

12. Procédé selon l'une quelconque des revendications 8 à 11, dans lequel au moins une partie de la face latérale du dispositif d'affichage est sensiblement perpendiculaire à la face avant du dispositif d'affichage.

13. Procédé selon l'une quelconque des revendications 8 à 12, dans lequel une zone d'affichage inactive (42) est présentée sur la face latérale du dispositif d'affichage et à l'extérieur de la zone d'affichage active en réponse à l'entrée de déformation.

14. Procédé selon la revendication 13, dans lequel la zone d'affichage inactive est plus sombre et/ou moins éclairée que la zone d'affichage active.

15. Code de programme d'ordinateur (18) qui, lorsqu'il est exécuté par au moins un processeur (12), provoque l'exécution du procédé selon l'une au moins des revendications 8 à 14.
